# EUROPEAN PATENT APPLICATION

(11) **EP 1 414 146 A1**
(43) Date of publication of application: **28.04.2004**
(21) Application number: 03078275.9
(22) Date of filing: 17.10.2003
(51) Int. Cl.: H02P 5/418, H02P 7/638

(54) **Interference suppression for an electric motor with variable rotation speed**

(30) Priority: 21.10.2002 IT MI20022232
(71) Applicant: Faber S.p.A., 60044 Fabriano (Ancona) (IT)
(72) Inventor: Patarchi, Alberto, 00122 Ostia Lido (Rome) (IT)
(74) Representative: Coppo, Alessandro

(57) **Abstract**

Electric motor with variable rotation speed, comprising a stator, (2) to which is connected at least one magnetic excitation coil, a rotor (5) on which are formed at least two magnetic poles with opposite polarity. Said coil is adapted to form on said stator at least two induction magnetic poles with opposite polarity to each other.
The motor also comprises an adjustment device for said rotation speed on said rotor, including an antijamming filter.

## Description

The present invention relates to an electric motor equipped with a rotation speed adjusting device.

In particular, the present invention relates to an electric motor having a rotation speed adjusting device connected to the induction coil of the motor itself.

It is known that the adjustment on electric motors for rotation speed control and alternate voltage power is commonly effectuated using two main systems.

A first system foresees the shutting of the sinusoid alternate current flow supplied to the motor induction coils, using TRIAC switches or SCR, wherein the conduction period is controlled in a manner to permit the transit of only a fraction of the sinusoid.

The Applicant observed that although said system was valid as far as control continuity is concerned, it introduces a harmonic of considerable entity due to the sudden interruption of the current flow.

A second well-known system, commonly called "chopper", on the other hand, performs a type of correction converting the negative half wave of the motor induction coil supply alternate current to positive. Said half wave is then "chopped" or "shut" through a high frequency switch signal, approximately 20 kHz, for example and is applied to the motor to be controlled (for example using a MOSFET or IGBT transistor). Adjusting the duty cycle, the induction coil current flow is controlled, and consequently also the motor speed.

The Applicant observed that in spite of the fact that said second system generates less harmonic interference than the first system, and minimises winding copper loss, a filter is needed to eliminate the ultrasound switch-over frequency. In fact, all switching circuits must be equipped with antijamming energy filters in order to comply with current regulations and standards.

Moreover, the first system also requires an antijamming filter to limit the presence in the current supplied to the motor induction coils of the said harmonic caused by the presence of the TRIAC changeover switch.

It is well known that for this purpose, an inductance composed of copper winding wound on a ferrite core is inserted in series between both types of adjustment system and the electric motor. Moreover, an RC (resistor-condenser) system is also positioned parallel to the changeover switch.

The Applicant noticed that the presence of said antijamming filter inductance requires a specific housing of a considerable size for the ferrite core. Moreover, the efficiency of the inductance is proportional to the impedance produced when crossed by the alternate current, and therefore it is proportional to the size in question. In particular, the larger the size of the inductance, the greater the efficiency of the antijamming filter.

The Applicant wished to resolve the problem of minimising the jamming caused by motor speed adjustment devices in a simple, and economical manner, limiting the dimensions of said device inside the motor itself.

For said purpose, the Applicant created a motor equipped with a device for adjusting the motor rotation speed, wherein a portion of at least one induction coil of said motor is used for the antijamming filter inductance, adapted to limit the jamming introduced by the switching frequency of the adjusting device. In particular, said motor induction coil is divided into two portions connected in series, preferably said two portions being identical to each other, and the adjusting device being inserted between the said two portions.

An aspect of the present invention concerns a variable rotation speed motor comprising a stator connected to at least one magnetic excitation coil, a rotor on which are formed at least two magnetic poles with opposite polarity, said at least one coil being adapted to form on said stator at least two magnetic induction poles, each having opposite polarity to the other. An adjustment device for said rotation speed of said rotor, including an antijamming filter, characterised by the fact that said antijamming filter comprises at least one portion of said magnetic induction coil.

The characteristics and advantages of the housing system according to the present invention will be made more understandable and clearer in the following description that provides examples but that are by no means limitative, of an embodiment with reference to the appended figures wherein:

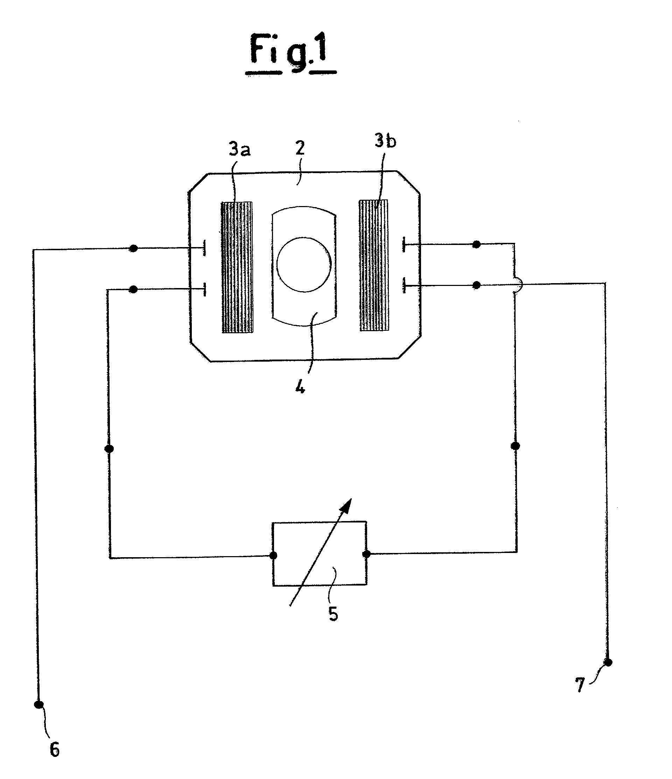

Figure 1 is a schematic view of the electric motor as a whole according to the present invention;
Figure 2 is a schematic view of the adjusting device inserted in the electric motor according to the present invention.
Figure 3 represents a possible electrical wiring diagram of the adjusting device according to the present invention.

With reference to the said figures, the motor according to a preferred embodiment of the present invention includes a stator 2, connected to at least one magnetic induction coil 3a and 3b, and a rotor 4.

Said at least one induction coil is adapted to generate on said stator at least two magnetic poles each having a polarity opposite to the other. Said rotor comprises at least two magnetic poles each having a polarity opposite to the other. Said rotor poles can be realised in a manner that is recognised according to state of the art using at least one permanent magneto connected to said rotor, or using at least one coil excited by an electric current sent to the rotor through appropriate sliding contacts, for example brushes, or through self-induction turns typical of asynchronous motors.

Said motor comprises a rotation speed adjusting device 5, connected to said at least one induction coil.

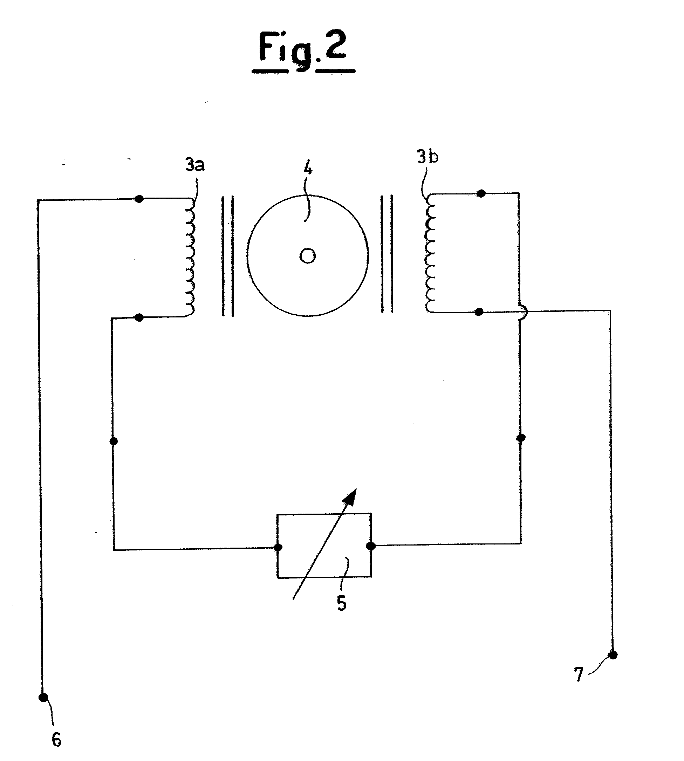

Figure 2 illustrates an embodiment of the present invention wherein the adjusting device 5 is connected to a motor induction coil supplied from an alternate current applied to terminals 6 and 7.

According to the present invention, said coil is divided into a first portion 3a and a second portion 3b connected in series to each other. Preferably, said first portion and said second portion are identical to each other.

The adjusting device 5 is inserted in series between said first portion 3a and said second portion 3b so that it is crossed by current I with the same intensity.

In this manner, the adjusting device 5 is protected both upstream and downstream by at least one portion of the induction coil 3a and 3b, that act as antijamming filter inductance aimed at considerably limiting the jamming generated during switch-over, and at reducing mechanical vibration caused by sudden torque peaks on the motors, in relation to speed, noise sources, and unpleasant resonance.

According to the present invention, therefore, at least one portion of the induction coil replaces the wound ferrite filter inductance used in current state of the art.

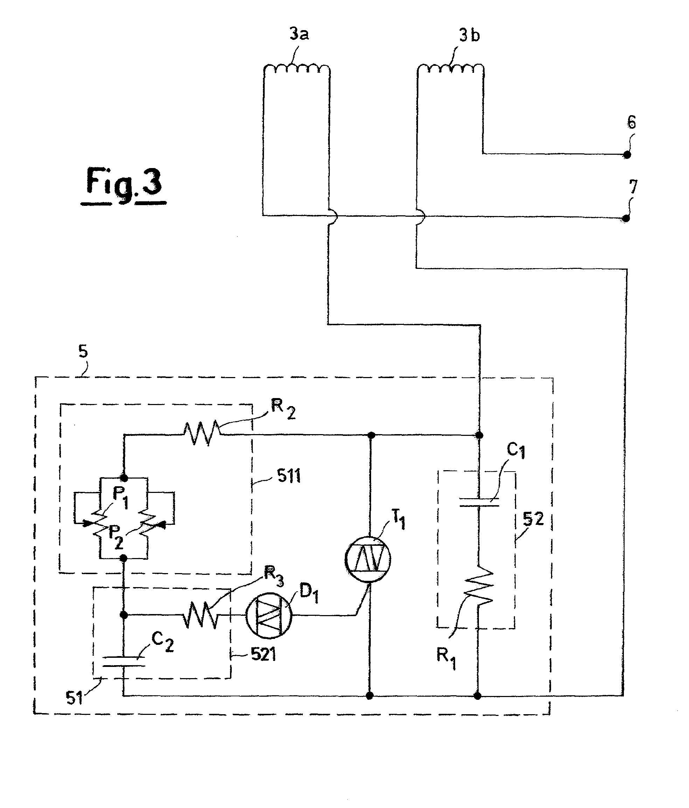

Figure 3 shows an electric wiring diagram of the adjusting device according to the present invention comprising a piloting circuit 51 for said induction coils positioned in parallel mode with an antijamming filter 52.

Said piloting circuit is of a well known type and is composed of a TRIAC T1 and a DIAC D1, a unit resistive to variable resistance 511 (resistor R2 and potentiometer in parallel mode P1 and P2) and an RC unit 521 (resistor R3 and condenser C2).

The RC 521 unit and the unit resistive to the variable resistance 511 determine the triggering of the TRIAC T1 when the DIAC D1 voltage "breakover" is exceeded, after a period of time that depends on the charging time constant of the condenser C2.

The electric power that passes through the TRIAC and that is supplied to the induction coils determines the motor rotation speed. This power increases according to the reduction of the condenser C2 time constant. Therefore, with the variation of the time constant of said condenser, the motor rotation speed will also vary. The potentiometers P1 and P2 are adapted to vary said time constant.

Said antijamming filter 52, is composed of an RC system, (a resistor R1 and a condenser C1 connected to each other in series). According to the present invention, the antijamming filter also comprises said portion of induction coil 3a and/or 3b. It is well known that an inductance L for alternate currents presents an impedance Z = 2πfL, where f represents the oscillating frequency of said alternate current. Therefore, at high frequency, said induction coil presents high impedance. The RC system acts in the opposite manner, since the condenser acts like a short circuit at high frequency.

The piloting circuit introduces high frequency harmonics cause by the triggering of the TRIAC, that determine currents of considerable impact on the correct motor function. The motor that also realises the filtering system in question, blocks said currents otherwise transmitted to the supply source. The filtering system according to the finding, helps reduce the mechanical torque ripple noise even further, as well as the electromagnetic jamming in asynchronous motors with out-of-phase windings, since adjusting can occur on one part only.

Although the embodiment refers to a piloting circuit with phase shutting, similar considerations can be achieved in relation to piloting circuits using "chopper" systems. In fact the switching signal frequency in a "chopper" piloting circuit requires the use of an antijamming filter such as that described in the present invention.

Moreover, the position of the adjusting device between the two portions of the induction coil determines the presence of two filter coils, one upstream, and the other down stream of the piloting circuit, thus increasing the total impendence for the high frequency jamming currents.

The present invention permits the elimination of the traditional filter inductance, providing considerable cost savings and a reduction in manual operations in motor construction, as well as the reduced space occupied in the printed circuit, and the use of switches such as (TRIAC, SCR, transistor, MOSFET, or IGBT) of lesser power, since these are inserted inside the connection in series of the motor windings, operating at lower voltage than that of the supply source.

Moreover, since the traditional filter inductance is the component that occupies the most space in a speed adjustment device, its elimination leads to the realising of much more compact and smaller sized motors in comparison to motors constructed with ferrite core filter inductance.

## Claims

1. Electric motor with variable rotation speed comprising
• a stator (2) connected to at least one magnetic excitation coil,
• a rotor (5) on which are formed at least two magnetic poles each having opposite polarity,
• said at least one coil being adapted to form on said stator at least two magnetic induction poles having opposite polarity,
• an adjusting device (5) for said rotation speed on said rotor comprising an antijamming filter (52),
**characterised in that** said antijamming filter comprises at least one portion of said magnetic induction coil.

2. Electric motor according to claim 1 wherein said magnetic induction coil is divided into a first portion (3a) and a second portion (3b) connected to each other in series and said adjusting device (5) is positioned between said first and said second portion.

3. Motor according to claim 2 wherein said first portion and said second portion are identical to each other.

4. Motor according to claim 1 wherein said antijamming filter (52) comprises an RC system.

5. Motor according to claim 1 wherein said adjusting device comprises a phase shutting piloting circuit.

6. Motor according to claim 1 wherein said adjusting device comprises a phase "chopper" piloting circuit.

7. Motor according to claim 1 wherein said adjusting device acts exclusively on a single part of the action windings in a single phase motor with out-of-phase condenser.

8. Motor according to claim 1 wherein said adjusting device acts exclusively on one phase in a motor having at least two phases.

9. Motor according to claim 1 wherein said adjusting device acts on the transformer windings.
